Europäisches Patentamt

European Patent Office

Office européen des brevets

(11) Numéro de publication: **0 226 522**
**A1**

## (12) DEMANDE DE BREVET EUROPEEN

(21) Numéro de dépôt: **86440095.7**

(22) Date de dépôt: **04.11.86**

(51) Int. Cl.⁴: **A 21 B 1/52**
**F 24 B 1/00**

(30) Priorité: **05.11.85 FR 8516474**

(43) Date de publication de la demande:
**24.06.87 Bulletin 87/26**

(84) Etats contractants désignés: **BE CH DE FR LI**

(71) Demandeur: **Furst, Ferdinand**
**1, route de Saverne**
**F-67370 Wiwersheim (FR)**

(72) Inventeur: **Furst, Ferdinand**
**1, route de Saverne**
**F-67370 Wiwersheim (FR)**

(74) Mandataire: **Nuss, Pierre**
**10, rue Jacques Kablé**
**F-67000 Strasbourg (FR)**

(54) Four à feu de bois en kit.

(57) La présente invention concerne un four à feu de bois, comportant un élément bas (1), une voûte (3), des parois (6, 7), une porte de chargement (5), l'assemblage de l'ensemble étant réalisé par emboîtage, caractérisé en ce qu'il se présente en kit et en ce que l'élément bas (1) et la voûte (3) sont munis sur leur contour de rainures (11, 12) dans lesquelles s'emboîtent les parois (6, 7).

FIGURE 1

EP 0 226 522 A1

## Description

Four à feu de bois en kit

La présente invention concerne un four à feu de bois en kit.

Ce four a été conçu pour la cuisson au feu de bois de tartes flambées. pizzas, pains ou autres types d'aliments de même nature sur sole en brique réfractaire.

A monter soi-même. ce four. constitué d'éléments réfractaires amovibles. offre tous les avantages des anciens fours à bois.

Conformément à l'invention. ce four à feu de bois comportant un élément bas, une voûte, des parois, une porte de chargement, l'assemblage de l'ensemble étant réalisé par emboîtage, est caractérisé en ce qu'il se présente en kit, et en ce que l'élément bas et la voûte sont munis sur leur périphérie de rainures dans lesquelles s'emboîtent les parois.

De faible encombrement, facile à monter et à démonter, facile à transporter, ce four s'utilise partout é l'extérieur, voire à l'intérieur s'il est raccordé à un conduit de fumée. Il est à poser sur un support résistant à la chaleur.

Son originalité réside dans le fait que l'utilisateur peut en un laps de temps très court assembler un vrai four à feu de bois chez lui à partir d'éléments réfractaires amovibles et ce par un simple système d'emboîtement.

Pour la cuisson de tartes flambées ou pizzas son utilisation est des plus simples : on préchauffe le four à l'aide de braises incandescentes, ensuite on pousse ces braises de part et d'autre des côtés du four, on place sur celles-ci quelques morceaux de bois pour obtenir des flammes. Le four est prêt, on y introduit la tarte flambée ou la pizza garnie. La chaleur irradiante de la sole réfractaire cuit la pâte, quant aux flammes qui se réfléchissent sur la voûte elles cuisent la garniture. La cuisson est très rapide du fait de la chaleur vive emmagasinée à l'intérieur du compartiment cuisson. Le nombre de tartes flambées ou pizzas que l'on peut cuire est lié à la durée de préchauffage plus ou moins longue du four. Dès que le compartiment cuisson n'est plus assez chaud, on replace les braises au centre de la sole.

Les dessins annexés illustrent l'invention :

la figure 1 est une vue en élévation et en coupe du four conforme à l'invention ;

la figure 2 représente le détail de montage de la partie basse ;

la figure 3 représente le détail de montage de la partie haute ;

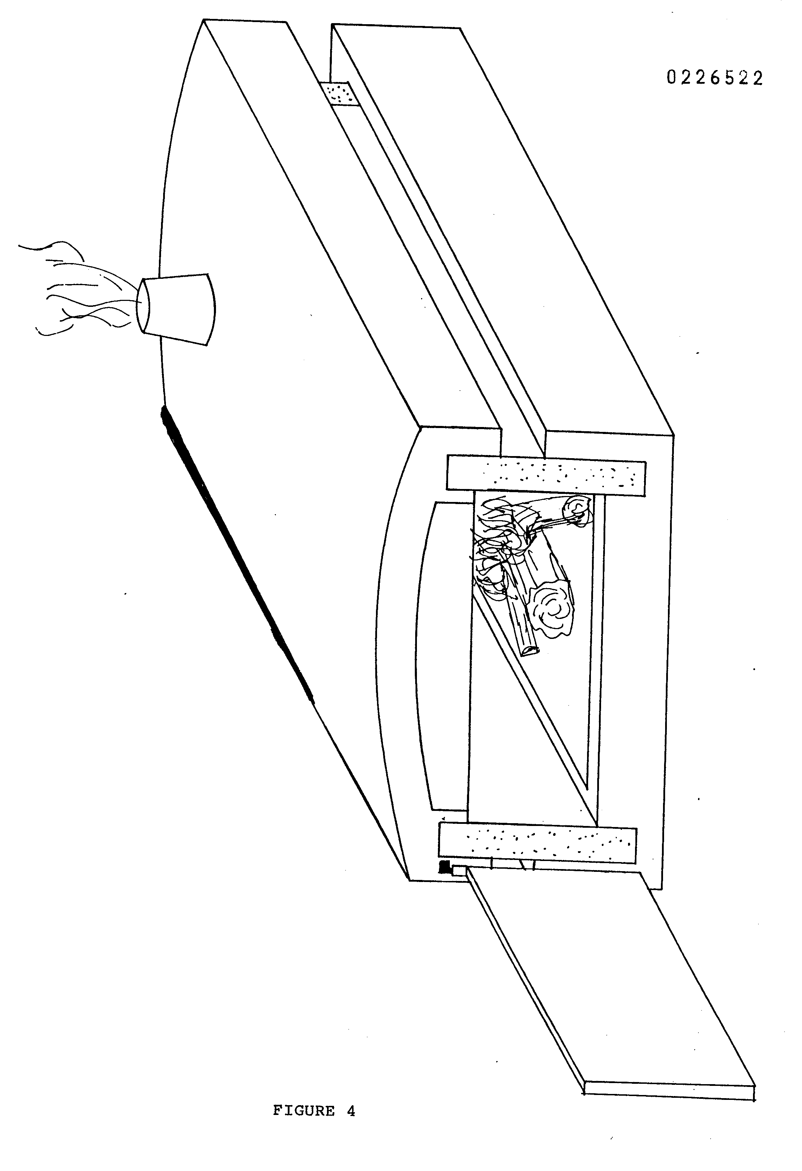

la figure 4 est une vue en perspective du four assemblé, et

la figure 5 est une vue analogue à celle de la figure 1 d'une variante de réalisation de l'invention.

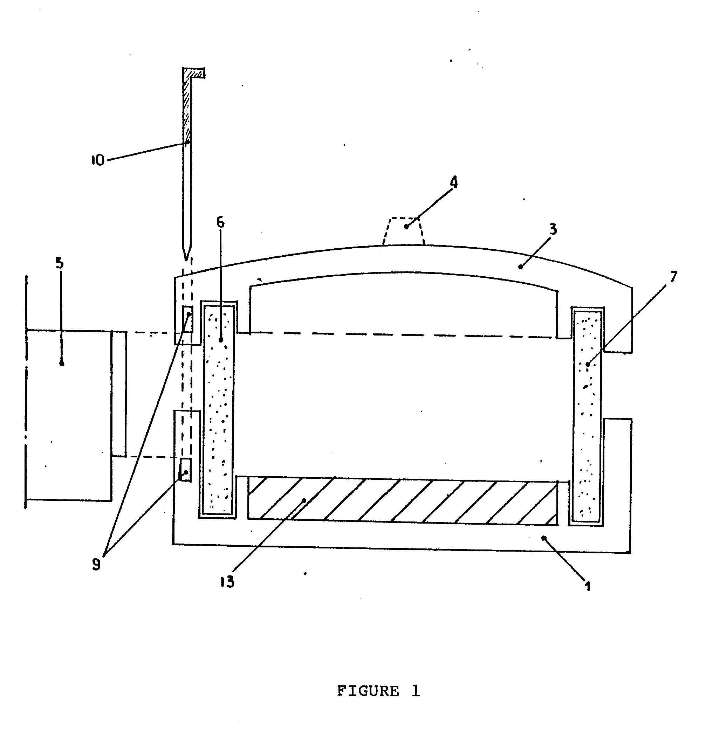

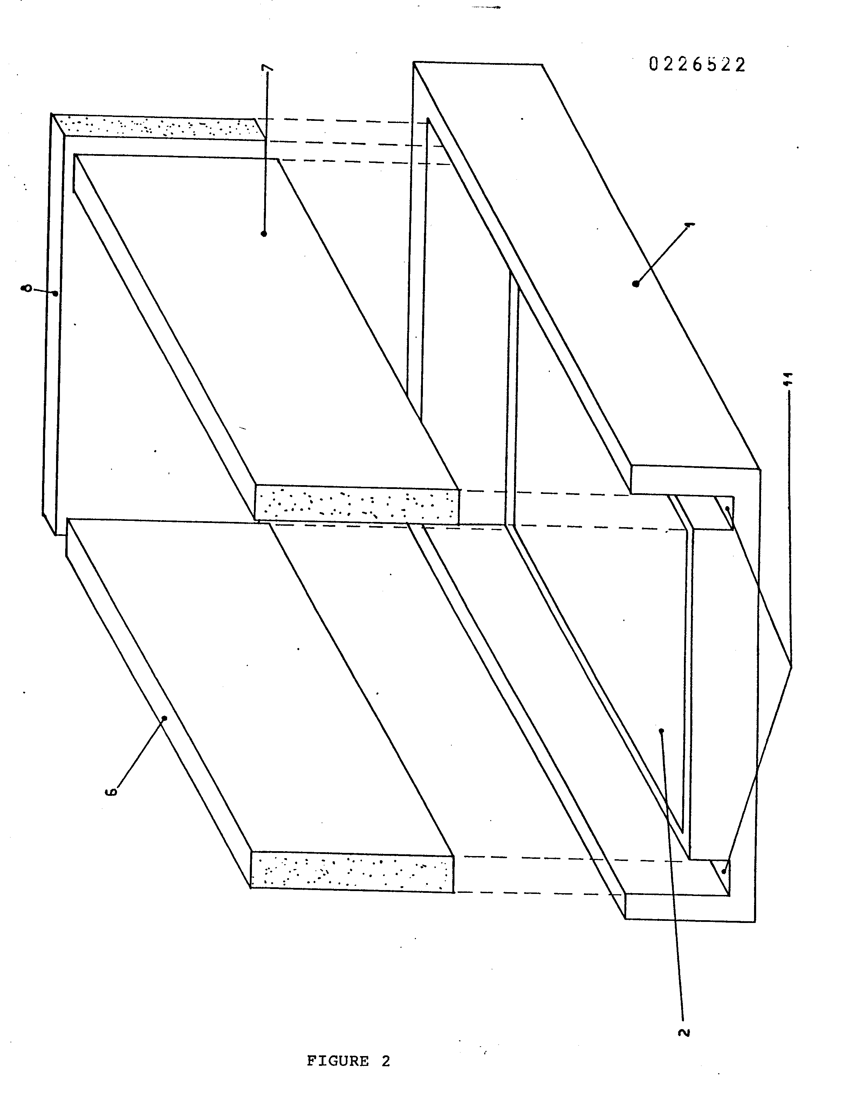

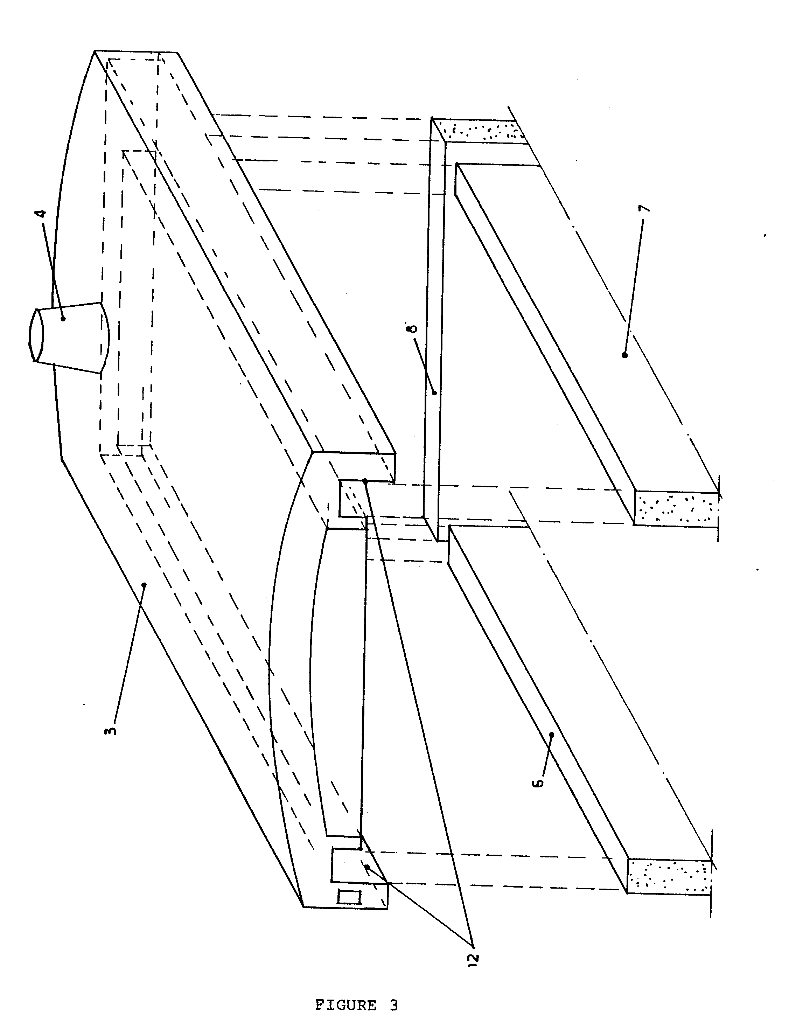

Conformément à l'invention, et comme le montrent plus particulièrement, à titre d'exemple, les figures 1 à 3 des dessins annexés, le four à feu be bois, qui est essentiellement constitué par un élément bas 1, par une voûte 3, par des parois 6 à 8, et par une porte de chargement 5, l'ensemble étant assemblé par emboîtage, est caractérisé en ce qu'il se présente en kit, et en ce que l'élément bas 1 et la voûte 3 sont munis sur leur périphérie de rainures 11 et 12 dans lesquelles s'emboîtent les parois 6 à 8.

Les différents éléments amovibles 1 à 8 constituant le four sont réalisés. de manière connue, en matériaux réfractaires.

La partie creuse 2 de l'élément bas garnie de briques réfractaires constitue la sole de cuisson 13.

La voûte 3 est munie d'un orifice de conduit de fumée 4.

La porte de chargement 5 dont l'arrière s'emboîte entre des charnons 9 est maintenue par une broche 10.

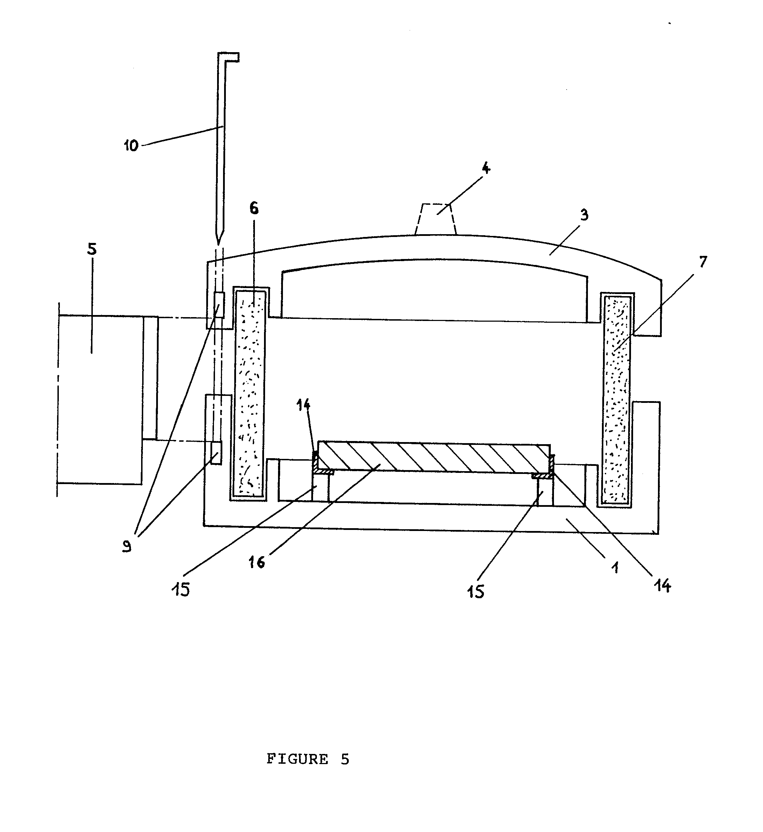

La figure 5 représente une variante de réalisation de l'invention, dans laquelle l'élément bas 1 est muni, parallèlement à ses bords longitudinaux et à écartement par rapport à ces derniers, de deux supports 14 en forme de rails, maintenus à écartement au-dessus de la face interne de l'élément bas 1 au moyen de plots 15 et destinés à la réception d'une sole en brique réfractaire 16, ou d'une grille de cuisson (non représentée).

Dans ce mode de réalisation, il est possible de réaliser simultanément un chauffage continu de la sole 16 par le dessous et une cuisson par les flammes remontant le long des parois latérales 6 et 7 dans les intervalles ménagés par les supports 14. En outre, les supports 14 en forme de guides sont également utilisables comme support d'une grille de cuisson pour la réalisation de grillades.

Le four selon l'invention est destiné aux particuliers pour leur permettre la cuisson au feu be bois, de tartes flambées, pizzas,pains ou autres aliments similaires, selon les anciennes traditions paysannes et ce à tout moment de l'année et en n'importe quel endroit.

Bien entendu, l'invention n'est pas limitée aux modes de réalisation décrits et représentés aux dessins annexés. Des modifications restent possibles, notamment du point de vue de la constitution des différents éléments, ou par substitution d'équivalents techniques, sans sortir pour autant du domaine de protection de l'invention.

## Revendications

1. Four à feu de bois comportant un élément bas (1), une voûte (3), des parois (6, 7, 8), une porte de chargement (5), l'assemblage de l'ensemble étant réalisé par emboîtage, caractérisé en ce qu'il se présente en kit, et en ce que l'élément bas (1) et la voûte (3) sont munis sur leur contour de rainures (11, 12) dans lesquelles d'emboîtent les parois (6, 7, 8).

2. Four à feu de bois selon la revendication 1, caractérisé en ce que la partie creuse (2) de l'élément bas (1) est garnie de brique réfractaire (13).

3. Four à feu de bois selon la revendication 1, caractérisé en ce que la voûte (3) est pourvue d'un orifice de conduit de fumée (4).

4. Four à feu de bois, selon la revendication 1, caractérisé en ce que la porte de chargement (5) s'emboîte entre des charnons (9) et est maintenue par une broche (10).

5. Four à feu de bois, selon la revendication 1, caractérisé en ce que l'élément bas (1) est muni parallèlement à ses bords longitudinaux et à écartement par rapport à ces derniers, de deux supports (14) en forme de rails, maintenus à écartement au-dessus de la face interne de l'élément bas (1) au moyen de plots (15) et destinés à la réception d'une sole en brique réfractaire (16), ou d'une grille de cuisson.

0226522

FIGURE 1

0226522

FIGURE 2

FIGURE 3

0226522

0226522

FIGURE 4

FIGURE 5

0226522

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 570 779 (H. HÖLZER) <br> * En entier * | 1-3 | A 21 B    1/52 <br> F 24 B    1/00 |
| | --- | | |
| Y | US-A-1 342 329 (J.L. FREEMAN) <br> * En entier * | 1-3 | |
| | --- | | |
| A | DE-A-2 554 094 (A. KROHE) <br> * Page 5, lignes 10-25; figures 1-5 * | 3 | |
| | --- | | |
| A | GB-A- 133 578 (J. GROSSE et al.) | | |
| | --- | | |
| A | FR-A-2 376 388 (J. CARAMALLI) | | |
| | ----- | | |

| DOMAINES TECHNIQUES RECHERCHES (Int. Cl.4) |
|---|
| A 21 B <br> F 24 B |

Le présent rapport de recherche a été établi pour toutes les revendications

| Lieu de la recherche | Date d'achèvement de la recherche | Examinateur |
|---|---|---|
| LA HAYE | 09-02-1987 | FRANKS N.M. |

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant